# EUROPÄISCHE PATENTANMELDUNG

(11) **EP 2 369 681 A2**
(43) Veröffentlichungstag der Anmeldung: **28.09.2011**
(21) Anmeldenummer: 11001819.9
(22) Anmeldetag: 04.03.2011
(51) Int. Cl.: H01R 4/50, H01R 43/027, A01K 3/00, E04H 17/04, H02G 1/14, H02G 15/113

(54) **Seil- und Litzenverbinder**

(30) Priorität: 22.03.2010 DE 102010012249
(71) Anmelder: Beichert, Alexander, 79692 Kleines Wiesental (DE)
(72) Erfinder: Beichert, Alexander, 79692 Kleines Wiesental (DE)
(74) Vertreter: Kirchgaesser, Johannes

(57) **Zusammenfassung**

Der erfindungsgemäße Seil- und Litzenverbinder besteht im Wesentlichen aus zwei zusammen fügbaren Halbschalen (1,2) mit jeweils einer Rinne (8,9) zum Einspannen der abgerissenen Litzen Enden (10.11). Die beiden Halbschalen (1,2) sind aus hartelastischem Kunststoff geformt, welche entlang der einen Längskante (4) über so genannte Filmscharniere (3) schwenkbar miteinander verbunden sind. An der gegenüber liegenden Kante (5) der einen Halbschale (1) sind so genannte auffederbare Rasthaken (6) angeformt, welche beim Zusammenklappen der Halbschalen (1,2) in entsprechende Aussparungen (7) an der Außenseite der anderen Halbschale (2) einrasten. An der Rinne (8) der einen Halbschale (1) sind querab zur Rinnenachse zwei Bügel (13) mit ihren beiden Bügelenden (16) schwenkbar angeformt. (siehe Fig.1)

Der Litzenverbinder dient in erster Linie zum Ausbessern von Weidenzäunen, aber auch von Tor- oder Fischnetzen, und bietet den großen Vorteil, dass beim Zusammenfügen der gerissenen Litzenenden (10,11) die Gesamtlänge der Litze (12) erhalten bleibt.

## Beschreibung

Die Erfindung betrifft einen Seil- und Litzenverbinder zur Reparatur von Weidenzäunen, bestehend aus zwei zusammen fügbaren Halbschalen mit Rinnen zum Einspannen der abgerissenen Litzen Enden.

Bei in der Praxis verwendeten Verbindern dieser Art sind die Halbschalen mit parallel zueinander verlaufenden Rinnen versehen, in welche die Litzenenden in entgegen gesetzter Richtung nebeneinander eingelegt und die beiden Halbschalen dann miteinander verschraubt werden. Hierbei sind in den Rinnen nach innen vorstehende Querrippen vorgesehen, welche sich beim Zusammenfügen der Halbschalen in die Litzen eingraben und dadurch die Zugfestigkeit der Verbindung erhöhen. Gleichzeitig kommen die Querrippen mit den in den Litzen eingeschlossenen Strom führenden Kabeln in Kontakt, wodurch die beiden Litzenenden auch elektrisch miteinander verbunden werden.

Diese Litzenverbinder haben den grundlegenden Nachteil, dass durch das aneinander Vorbeiführen der Litzenenden die Gesamtlänge der Litzen verkürzt wird. Außerdem muss dieser Verbinder zur elektrischen Überbrückung der Litzenenden aus Metall geformt sein, was zusammen mit der Schraubverbindung die Herstellungskosten der Verbinder stark erhöht.

Ausgehend von diesem Stand der Technik ist es die Aufgabe der Erfindung, den Seil- und Litzenverbinder so zu gestalten, dass beim Zusammenfügen der Endstücke die Gesamtlänge der gerissenen Litze erhalten bleibt und gleichzeitig die Herstellungskosten für den Verbinder gesenkt werden.

Zur Lösung dieser Aufgabe wird vorgeschlagen, die beiden Halbschalen aus hartelastischem Kunststoff herzustellen und entlang der einen Längskante über so genannte Filmscharniere schwenkbar miteinander zu verbinden und an der gegenüber liegenden Kante der einen Halbschale so genannte Rasthaken anzuformen, welche beim Zusammenklappen der Halbschalen in entsprechende Aussparungen bei der anderen Halbschale einrasten, und dass die Halbschalen jeweils nur eine Rinne aufweisen, wobei an der Rinne einer Halbschale von der Stirnseite im Abstand von einem Viertel der Schalenlänge querab zur Rinnenachse zwei Bügel mit ihren beiden Enden schwenkbar angeformt sind.

Mit diesem Verbinder lassen sich die abgerissenen Enden einer Litze auf einfache Weise wie folgt verbinden: die Litzenenden werden nacheinander von der Mitte der Rinne aus unter den Bügel hindurch bis an die Stirnseite der Halbschale nach außen geführt. Nun werden die Bügel zur Stirnseite hin nach unten geklappt, wobei die Litzen von einander weg nach außen geknickt werden. Sodann wird die freie Halbschale auf die mit den Litzen belegte Halbschale herunter geschwenkt, bis die Rastnasen in die zugehörigen Aussparungen einrasten. Auf diese Weise werden die Litzenenden ohne Verkürzung der Gesamtlänge zugfest miteinander verbunden.

Zur Vereinfachung der Handhabung beim Einführen und Abknicken der Litzenenden ist es nach einem weiteren Merkmal der Erfindung zweckmäßig, wenn die Bügel beim Herunterklappen mit ihren Längskanten von Rasthaken erfasst werden, welche kurz vor dem Ende der Halterinnen senkrecht abstehen und mit ihrer zur Rinnenachse gerichteten Rastnase elastisch nach außen schwenkbar angeformt sind.

Um auch die Litzenenden elektrisch miteinander zu verbinden, ist es weiterhin zweckmäßig, wenn in der Rinne gegenüber den Bügeln eine längliche Stahlpatte eingelegt wird, die beim Herunterdrücken der Litzenenden zwangsläufig Kontakt mit dem in die Litze eingearbeiteten Stromkabel bekommt. Dadurch können die gerissenen Litzenenden nicht nur zugfest miteinander verbunden werden, sondern der zum Abschrecken der Tiere benötigte Schwachstrom kann wieder ungestört fließen.

In der Zeichnung ist ein bevorzugtes Ausführungsbeispiel der Erfindung dargestellt und soll nachfolgend näher erläutert werden. Es zeigen
- Fig. 1: Den erfindungsgemäßen Litzenverbinder in perspektivischer Darstellung,
- Fig. 2: Einen geöffneten Verbinder in Vorderansicht,
- Fig. 3: Den gleichen Verbinder in einer Draufsicht ,
- Fig. 4: Den gleichen Verbinder in Seitenansicht,
- Fig. 5: Einen Schnitt durch den Verbinder gemäß Linie V - V,
- Fig. 6: Einen Schnitt durch den Verbinder gemäß Linie VI - VI,
- Fig. 7: Einen Schnitt durch den Verbinder gemäß Linie VII - VII und
- Fig. 8 a - f: Den Arbeitsablauf beim Einlegen der Litzenenden in sechs Arbeitsschritten.

Der in den Figuren dargestellte Litzenverbinder dient in erster Linie zum Ausbessern von Weidenzäunen, welche durch ruckartige Bewegungen der eingezäunten Tiere schon mal reißen können; der Verbinder kann aber auch zum Flicken von Tornetzen oder Fischnetzen verwendet werden. In allen Fällen ist das Zusammenknoten der abgerissenen Enden nur ein schlechter Behelf, weil dadurch die Litzenlänge verkürzt wird. Außerdem ist bei Elektrozäunen der Stromdurchfluss nicht gewährleistet und es besteht die Gefahr, dass die Litzen an den Knoten wieder einreißen.

Der Litzenverbinder besteht im Wesentlichen aus zwei lang gestreckten Halbschalen 1 und 2, welche erfindungsgemäß aus hartelastischem Kunststoff hergestellt und entlang der einen Längskante 4 über so genannte Filmscharniere 3 miteinander verbunden sind. An der gegenüber liegenden Längskante 5 sind bei der einen Halbschale 1 so genannte auffederbare Rasthaken 6 angeformt, welche beim Zusammenklappen der beiden Halbschalen 1 und 2 in entsprechende Aussparungen 7 an der Außenseite der anderen Halbschale 2 einrasten. Beide Halbschalen 1 und 2 weisen jeweils eine Rinne 8 bzw. 9 auf, in welche die Enden 10 bzw. 11 einer abgerissenen Litze 12 eingelegt werden können.

An der Rinne 8 der einen Halbschale 1 sind querab zur Rinnenachse zwei Bügel 13 mit ihren Bügelenden 16 schwenkbar angeformt. Diese Bügel 13 besitzen eine Durchgangsöffnung 14 zum Einfädeln der abgerissenen Litzenenden 10 und 11, wobei die Durchgangsöffnung 14 nach oben V - förmig zusammen läuft und mit einer dem Litzendurchmesser entsprechenden, schlüssellochartigen Lochwand 15 abschließt.

Die Bügel 13 sind mit ihren Enden 16 jeweils in einem Abstand "a" von der Stirnseite 17 der Halbschale 1 mit der Rinnenkante 18 verbunden, wobei dieser Abstand "a" einem Viertel der Länge "L" der Halbschale 1 entspricht. In diesem Bereich sind an der Bodenfläche kleine, pyramidenförmige Spitzen 25 angeformt, um eine bessere Haltekraft für die Litzenenden 10 und 11 zu gewährleisten.

Kurz vor der Stirnseite 17 der Halterinne 8 stehen Rasthaken 19 senkrecht hoch, welche mit ihrer zur Rinnenachse gerichteten Rastnase 20 an der Rinnenkante 18 schwenkbar angeformt sind. Hierdurch wird erreicht, dass die Bügel 13 nach dem Einfädeln der Litzenenden 10 und 11 beim Herunterklappen mit ihren Längskanten 21 unter den Rastnasen 20 einrasten.

Die Rasthaken 19 besitzen ferner an ihren Außenseiten noch je eine zusätzliche Rastnase 23, welche beim Zusammenklappen der Halbschalen 1 und 2 in entsprechend ausgebildete, zur Rinnenachse gerichtete Haltekanten 24 an der gegenüberliegenden Halbschale 2 einrasten. Dadurch wird eine zusätzliche Sicherung gewährleistet für den Fall, dass das Filmscharnier 3 ermüdet und reist.

Die Rasthaken 6 sind zweckmäßigerweise an ihrer Außenseite entsprechend der Mantelkrümmung der Halbschale 2 gebogen, während die Mantelfläche der gegenüber liegenden Halbschale 1 eine bis zur Aussparung 7 reichende ringförmige Vertiefung 22 entsprechend der Breite "b" der Rasthaken 6 aufweist.

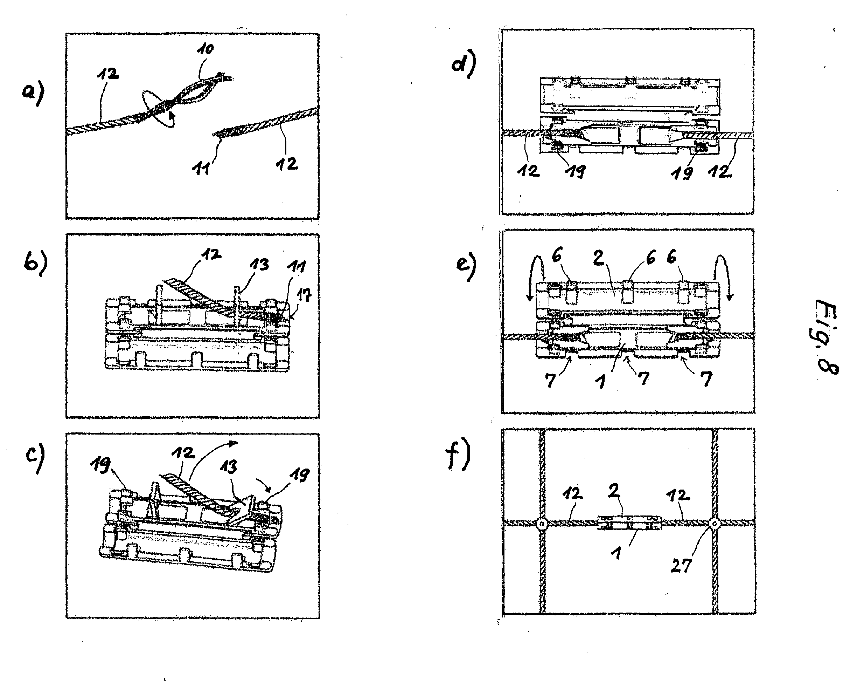

Die Wirkungsweise des erfindungsgemäßen Litzenverbinders ist in Figur 8 anschaulich dargestellt, in welcher der Arbeitsablauf beim Verbinden zweier abgerissenen Litzenenden in 6 aufeinander folgenden Bildern gezeigt und nachfolgend näher beschrieben wird.
1. Schritt: Die abgerissenen Enden 10 und 11 der Litze 12 werden zur Vorbereitung des Einfädelns zunächst zwischen dem nassen Daumen und Zeigefinger gezwirbelt (Bild a)
2. Schritt: Das Ende 11 wird sodann von der Mitte der Rinne durch die Öffnung des Bügels 13 bis an die Stirnseite 17 der Halbschale 1 nach außen geführt (Bild b).
3. Schritt: Sodann wird der Bügel 13 nach außen heruntergeklappt (Bild c), bis die Längskanten 21 der Bügel 13 unter den Rastnasen 20 der Rasthaken 19 eingerastet sind.
4. Schritt: Jetzt wird mit dem anderen Litzenende 10 genau so verfahren, wobei dieses Ende 10 vor dem Einrasten des Bügels 13 unter den Rastnasen 20 im Schlüsselloch 15 soweit durchgezogen werden kann, bis die verbundene Litze 12 straff gespannt ist (Bild d).
5. Schritt: Nun wird die andere Halbschale 2 geschwenkt und auf die Halbschale 1 herunter gedrückt, bis die Rasthaken 6 in den zugehörigen Aussparungen 7 eingerastet sind (Bild e)
6. Schritt: die Litzenenden 10 und 11 sind nun so miteinander verbunden, dass die ursprüngliche Länge der Litze 12 erhalten bleibt. (Bild f)

Die erfindungsgemäße Art der Verbindung ist nicht nur kostengünstig sondern auch mit wenigen Handgriffen zu bewerkstelligen. Sie kann sowohl zum Ausbessern von Weidenzäunen eingesetzt, als auch, wie aus Bild f ersichtlich, auch zum Flicken von Tornetzen oder Fischnetzen verwendet werden.

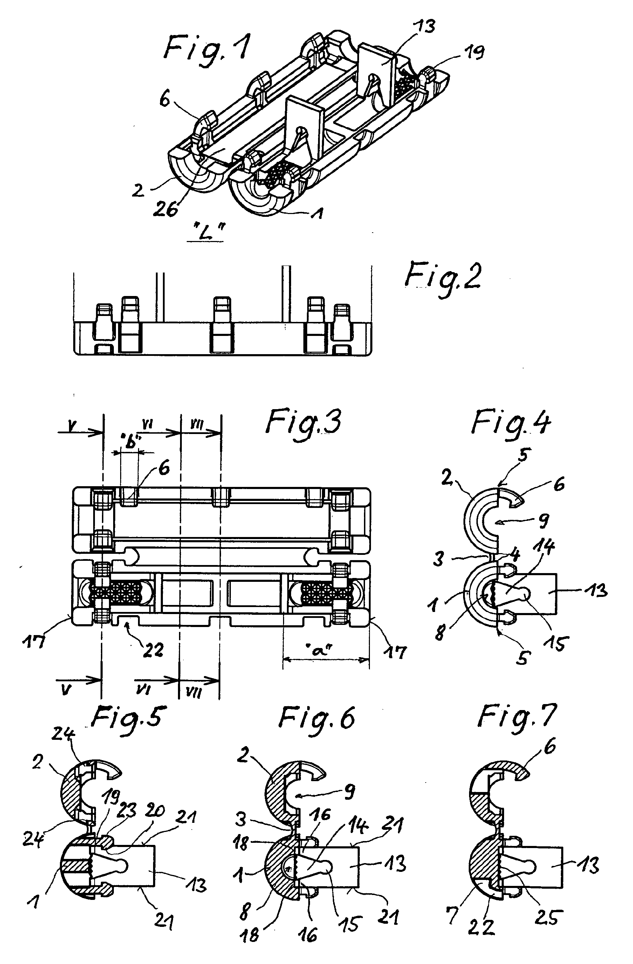

Um bei ausgebesserten Weidenzäunen auch den Stromdurchfluss zu gewährleisten, kann in der anderen Halbschale 2, wie aus Figur 1 ersichtlich, in der Rinne 9 eine längliche Stahlplatte 26 eingelegt werden, durch welche beim Zusammenklappen der Halbschalen 1 und 2 der Kontakt zwischen den beiden in die Litze 12 eingearbeiteten Kabeln hergestellt wird.

Die erfindungsgemäßen Verbinder können auch zu Ausbessern von gerissenen Netzknoten 27 verwendet werden. Hierzu müssen die Halbschalen 1 und 2 lediglich T-förmig oder kreuzförmig zusammengesetzt werden, je nachdem, ob sich die Knoten 27 am Rand oder in der Mitte des Netzes befinden.

### Bezugszeichenliste:

- 1: Halbschale
- 2: Halbschale
- 3: Filmscharnier
- 4: Längskante
- 5: Längskante
- 6: Rasthaken
- 7: Aussparung
- 8: Rinne
- 9: Rinne
- 10: Litzenende
- 11: Litzenende
- 12: Litze
- 13: Bügel
- 14: Durchgangsöffnung
- 15: Bogenwand
- 16: Bügelenden
- 17: Stirnseite
- 18: Rinnenkante
- 19: Rasthaken
- 20: Rastnase (innen)
- 21: Bügellängskanten
- 22: Ringförmige Vertiefung
- 23: Rastnase (außen)
- 24: Haltekanten
- 25: Pyramidenförmige Spitzen
- 26: Stahlplatte
- 27: Knoten

## Patentansprüche

1. Seil- und Litzenverbinder zum Ausbessern von Weidenzäunen, bestehend aus zwei zusammen fügbaren Halbschalen (1,2) mit Rinnen (8,9) zum Einspannen von abgerissenen Litzen Enden (10,11), **dadurch gekennzeichnet, dass** die beiden Halbschalen (1,2) aus hartelastischem Kunststoff geformt und entlang der einen Längskante (4) über so genannte Filmscharniere (3) schwenkbar miteinander verbunden sind, während an der gegenüber liegenden Kante (5) der einen Halbschale (1) so genannte auffederbare Rasthaken (6) angeformt sind, welche beim Zusammenklappen der Halbschalen (1,2) in entsprechende Aussparungen (7) an der Außenseite der anderen Halbschale (2) einrasten, und dass die Halbschalen (1,2) jeweils nur eine Rinne (8,9) aufweisen, wobei an der Rinne (8) der einen Halbschale (1) querab zur Rinnenachse zwei Bügel (13) mit ihren beiden Bügelenden (16) schwenkbar angeformt sind.

2. Seil- und Litzenverbinder nach Anspruch 1, **dadurch gekennzeichnet, dass** die Bügel (13) mit ihren Enden (16) jeweils in einem Abstand "a" von der Stirnseite (17) der Halbschale (1) mit der Rinnenkante (18) verbunden sind, wobei dieser Abstand "a" etwa einem Viertel der Länge "L" der Halbschale (1) entspricht

3. Seil- und Litzenverbinder nach Anspruch 1 oder 2, **dadurch gekennzeichnet, dass** die Durchgangsöffnung (14) der Bügel (13) nach oben V-förmig zusammen läuft und mit einer dem Litzendurchmesser entsprechenden, schlüssellochartigen Lochwand (15) abschließt.

4. Seil- und Litzenverbinder nach einem der Ansprüche 1 bis 3, **dadurch gekennzeichnet, dass** die Bügel (13) beim Herunterklappen mit ihren Längskanten (21) von Rasthaken (19) erfasst werden, welche kurz vor dem Ende der Halterinne (8) senkrecht hoch stehen und mit ihrer zur Rinnenachse gerichteten Rastnase (20) an der Rinnenkante (19) nach außen schwenkbar angeformt sind.

5. Seil- und Litzenverbinder nach Anspruch 4, **dadurch gekennzeichnet, dass** die Rasthaken (19) an ihrer Außenseite noch je eine zusätzliche Rastnase (23) aufweisen, welche beim Zusammenklappen der Halbschalen (1 und 2) in entsprechend ausgebildete, zur Rinnenachse gerichtete Haltekanten (24) an der gegenüberliegenden Halbschale (2) einrasten.

6. Seil- und Litzenverbinder nach Anspruch 1 oder 2, **dadurch gekennzeichnet, dass** im Bereich zwischen den Bügelenden (16) und der Stirnseite (17) an der Bodenfläche der Rinne (8) kleine, pyramidenförmige Spitzen (25) angeformt sind.

7. Seil- und Litzenverbinder nach einem der Ansprüche 1 bis 6, **dadurch gekennzeichnet, dass** die Rasthaken (6) an ihrer Außenseite entsprechend der Mantelkrümmung der Halbschale (2) gebogen sind und in der Mantelfläche der gegenüberliegenden Halbschale (1) eine bis zur Aussparung (7) reichende, ringförmige Vertiefung (22) entsprechend der Breite "b" der Rasthaken (6) eingeformt ist.
